# EUROPÄISCHE PATENTSCHRIFT

(11) **EP 0 896 376 B1**
(45) Veröffentlichungstag und Bekanntmachung des Hinweises auf die Patenterteilung: **28.07.2004**
(21) Anmeldenummer: 98108498.1
(22) Anmeldetag: 11.05.1998
(51) Int. Cl.: H01M 4/52

(54) **Aktives nickelhydroxidhaltiges Material für alkalische Akkumulatoren und Verfahren zu seiner Herstellung**
Active material containing nickel hydroxide for alkaline accumulator and its production method
Materiau actif à base d'hydroxyde de nickel pour accumulateur alcalin et son procede de fabrication

(30) Priorität: 28.07.1997 DE 19732321
(43) Veröffentlichungstag der Anmeldung: 10.02.1999
(73) Patentinhaber: VARTA Automotive Systems GmbH, 30419 Hannover (DE)
(72) Erfinder: Bäuerlein, Peter, Dr., 65520 Bad Camberg (DE); Föller, Erika, 61352 Bad Homburg (DE); Lichtenberg, Frank, Dr., 86159 Augsburg (DE)
(74) Vertreter: Lins, Edgar, Dipl.-Phys. Dr.jur.

(56) Entgegenhaltungen:
- EP-A- 0 658 947
- EP-A- 0 696 076
- WO-A-96/14666
- US-A- 5 506 076

## Beschreibung

Die Erfindung betrifft ein aktives Material für positive Elektroden von alkalischen Akkumulatoren, bei dem die Oberfläche der Teilchen aus sphärischem Nickelhydroxid mit einem Metall-Mischhydroxid beschichtet ist. Die Erfindung betrifft ferner ein Verfahren zur Herstellung eines derartigen aktiven Materials.

Nickelhydroxidelektroden, die als aktives Material hauptsächlich Nickelhydroxid enthalten, werden eingesetzt als positive Elektroden in Nickel-Cadmium (NiCd)- und Nikkel-Metallhydrid (NiMH)-Akkumulatoren. Einhergehend mit den steigenden Anforderungen an eine verbesserte Kapazität der Zellen, insbesondere im Hinblick auf den Einsatz solcher Akkumulatoren in transportablen elektronischen Geräten, besteht der Bedarf nach einer verbesserten Energiedichte der verwendeten Akkumulatoren und damit der darin eingesetzten Nickelhydroxidelektroden. Neben der höheren Kapazität bestehen auch höhere Anforderungen hinsichtlich der Tiefentladbarkeit bzw. Überladbarkeit der Zellen. Die beiden letztgenannten Anforderungen werden durch den HTSC-Test (High Temperature Short Circuit)-Test simuliert. Zur Erhöhung der Kapazität von Nickelhydroxidelektroden sind verschiedene Verfahren bekannt. So wird in dem Dokument EP-A 544011 die Kopräzipitation von Zink und/oder Kobalt mit dem Nickelhydroxid beschrieben. Dabei entsteht eine die Hydroxide des Zink und Kobalt enthaltende Nickelhydroxid-Feststoff Lösung.

Aus dem Dokument EP-A 650207 ist ein Nickelhydroxid-Material bekannt, das durch die gemeinsame Fällung von Nickelhydroxid mit Hydroxiden der Metalle, ausgewählt aus der Gruppe Zink, Cadmium, Magnesium, Calcium, Mangan, Kobalt, Kupfer und Aluminium, erhalten wird, wobei anschließend ein Teil dieser Metallionen aus dem Nickelhydroxid wieder extrahiert wird.

Weiterhin ist es aus dem Dokument EP-A 727835 bekannt, nickelhydroxidhaltige Materialien für positive Elektroden von alkalischen Akkumulatoren herzustellen, indem man die Nickelhydroxid enthaltenden Teilchen mit einem Metall-Mischhydroxid bestehend aus Kobalt und wenigstens einem weiteren Metalloxid beschichtet. Als weitere Metallhydroxide werden die des Aluminiums, Magnesiums, Indiums und Zinks offenbart.

Aus EP-A-0 696 076 und W096/14 666 sind weitere Beschichtungen eines nickelhydroxidhaltigen Elektrodenmaterials für alkalische Akkumulatoren bekannt, bei denen die Nickelhydroxidteilchen mit einem Metall-Mischhydroxid, bestehend aus Co- und In-Hydroxiden oder Co- und z. B. MI-Hydroxiden beschichtet sind.

Der vorliegenden Erfindung liegt die Aufgabe zugrunde, ein aktives Material für positive Elektroden von alkalischen Akkumulatoren sowie ein Verfahren zu seiner Herstellung anzugeben, mit denen eine hohe Kapazität erreichbar ist und die Erfordernisse des HTSC-Tests besser erfüllt werden. Erfindungsgemäß wird diese Aufgabe durch die in Anspruch 1 angegebenen Merkmale gelöst. Weitere vorteilhafte Ausgestaltungen der Erfindung sowie ein Verfahren zur Herstellung der erfindungsgemäßen Materialien sind in den Ansprüchen 2 - 5 dargelegt.

Die erfindungsgemäß erhaltenen Materialien weisen eine höhere Kapazität als die bekannten Materialien auf und unterliegen einem geringeren Kapazitätsverlust beim HTSC-Test.

### Beispiele

100 g sphärisches Nickelhydroxid wird unter Ar-Schutz in einer Lösung von 11 g (275 mmol) NaOH in 400 ml Ar-gesättigtem Wasser suspendiert. Anschließend wird innerhalb von 1-2 h eine Lösung von 25.6 g (108 mmol) Kobalt(II)chlorid-Hexahydrat und 3.24 mmol des jeweiligen Metallchlorids (MCl_{y}) in 400 ml Ar-gesättigtem Wasser bei Raumtemperatur zugetropft. Nach weiteren 0.5 h Rühren bei Raumtemperatur, läßt man über Nacht absitzen. Die Lösung wird unter Ar-Schutz vom Feststoff abdekantiert und dieser unter Ar-Schutz abgesaugt. Anschließend wird der Rückstand mehrmals mit insgesamt 800 ml einer 0.1%igen, Ar-gesättigten NaOH und mehrmals mit insgesamt 500 ml Ar-gesättigtem Wasser gewaschen. Das Produkt wird im Vakuumexsikkator über NaOH getrocknet. Die Charakterisierung des erhaltenen Produktes erfolgt mittels Pulver-Röntgen-Diffraktometrie (XRD), Rasterelektronenmikroskopie (REM) und chemischer Analyse.

Das, wie oben beschrieben, hergestellte Material wird sodann in Knopfzellen auf seine elektrochemische Aktivität hin untersucht. Zunächst stellt man eine Mischung aus dem beschichteten Material, CoO und Ni-Pulver her. Dabei werden zwei Mischungen mit folgenden Anteilen hergestellt: Mischung A = 30% Ni-Pulver, 5% CoO und 65% beschichtetes Material oder Mischung B = 60% beschichtetes Material + 10% CoO + 30% Ni-Pulver (siehe Tabelle 1, Versuch Nr. 3,5-7 = Mischung A und Versuch Nr. 1,2,4 = Mischung B). Der Vergleich erfolgt einerseits mit einer Mischung von 60% unbeschichtetem Ni(OH)₂ + 10% CoO + 30% Ni-Pulver (Vergleichsbeispiel A) und andererseits mit einer Mischung 60% Co(OH)₂-beschichteten Ni(OH)₂ + 10% CoO + 30% Ni (Vergleichsbeispiel B). Aus den angegebenen Mischungen werden Tabletten gepreßt, welche als Kathode in Knopfzellen Verwendung finden. Die Anode stellt eine kommerzielle Wasserstoff-Speicherlegierung des AB₅-Typs dar. Als Elektrolyt dient 6.5 N KOH + 0.5 N LiOH. Die Elektroden lagert man zunächst 2 h im Elektrolyten, bevor man sie mit Separator und frischem Elektrolyt in die Zellenbecher einsetzt und diese verbördelt. Die Knopfzellen werden 3 Tage bei 45°C gelagert, anschließend werden die Zellen 15 h mit C/9 geladen und danach mit 2/9 C entladen, wobei C die zur einstündigen Ladung bzw. Entladung notwendige Stromstärke ist. Danach führt man 9 Lade/Entladezyklen aus, wobei man 7h mit 2/9C lädt und mit 2/9 C bis zu einer Abschaltspannung von 1 V entlädt. Im Anschluß an dieses Zyklenregime folgt der HTSC-Test. Die entladenen Zellen werden über einen 2Ω-Widerstand kurzgeschlossen und in diesem Zustand 3 Tage bei 60°C aufbewahrt. Anschließend folgen 5 weitere Zyklen mit einem Lade- bzw. Entladestrom von 2/9 C, wie vorher beschrieben. Aus der Zellenkapazität vor und nach HTSC läßt sich der HTSC-Verlust ermitteln.

Die Ergebnisse wurden mit einem beschichteten Material erhalten, bei welchem die Schicht einen Gewichtsanteil von 10% bzgl. des eingesetzten Nickelhydroxids aufweist.

**Tabelle 1**

| **Versuch Nr.** | **M** | **x** | **Kapazität [mAh/g]** | **HTSC-Verlust [%]** | **Kapazität bzgl. unbeschichteten Ni(OH)**_{**2**} **[%]** | **Kapazität bzgl. Co(OH)**_{**2**}**- beschichteten Ni(OH)**_{**2**} **[%]** |
|---|---|---|---|---|---|---|
| A | + | 0 | 253 | 14.0 | 100 | 96 |
| B | # | 0 | 263 | 15 | 104 | 100 |
| 1 | Cr* | 0.28 | 266 | 3.4 | 106 | 101 |
| 2 | Mn* | 0.31 | 262 | <0 | 104 | 100 |
| 3 | Cu | 0.03 | 289 | 4.4 | 114 | 110 |
| 4 | Pb* | 0.14 | 283 | 2.5 | 112 | 108 |
| 5 | Y | 0.03 | 264 | 3.8 | 104 | 100 |
| 6 | La | 0.03 | 271 | 4.0 | 107 | 103 |
| 7 | Ce | 0.03 | 270 | 5.2 | 107 | 103 |

| | | | | | | |
|---|---|---|---|---|---|---|
| + Vergleichsversuch A - unbeschichtetes Ni(OH)₂ | | | | | | |
| # Vergleichsversuch B - Co(OH)₂ beschichtetes Ni(OH)₂ | | | | | | |
| * abweichende Mischung für Knopfzellenelektroden: 60% beschichtetes Material + 10% CoO + 30% Ni-Pulver | | | | | | |
| x molare Anteil des erfindungsgemäßen Metallhydroxids in der Beschichtung | | | | | | |

Die Beschichtung des Nickelhydroxids mit lediglich Co(OH)₂ steigert nur die Masseausnutzung desselben. Der HTSC-Verlust bleibt jedoch unbeeinflußt. Durch die Kopräzipitation von Co- und anderen Metallsalzen kann man die Masseausnutzung noch steigern, insbesondere bei Kopräzipitation von Co- und Cu-Salzen; in jedem Falle jedoch läßt sich der HTSC-Verlust deutlich vermindern.

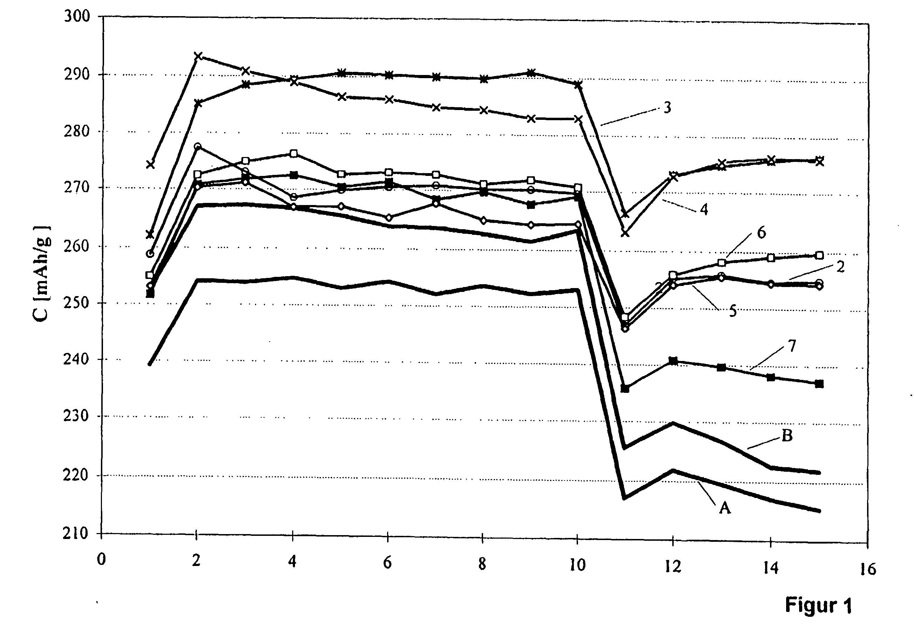

In Figur 1 sind die ermittelten Kapazitäten der Knopfzellen mit Elektrodenmassen gemäß den Beispielen 2 -7 sowie den Vergleichbeispielen A und B von Tabelle 1 in Abhängigkeit von der Zyklenzahl enthalten. Der HTSC-Test wurde nach dem 10. Zyklus durchgeführt.

Bei der Herstellung der erfindungsgemaß beschichteten Nickelhydroxide können auch Sulfate oder Nitrate des Kobalts oder der Metalle (M) statt der in den Beispielen beschriebenen Chloride verwendet werden.

## Patentansprüche

1. Aktives Material für positive Elektroden von alkalischen Akkumulatoren, bei dem die Oberfläche der Teilchen aus sphärischem Nickelhydroxid mit einem Metall-Mischhydroxid beschichtet ist, **dadurch gekennzeichnet, daß** die Beschichtung aus einem Kobalt-Mischhydroxid mit einem Hydroxid eines Metalls ausgewählt aus der Gruppe Cu, Pb, Cr der Nebengruppe IIIb oder der Gruppe der Lanthaniden oder einem Gemisch dieser Hydroxide, besteht, wobei der molare Anteil des Kobalthydroxids an der Beschichtung 60 - 99,5 Mol % beträgt.

2. Aktives nickelhydroxidhaltiges Material nach Anspruch 1, **dadurch gekennzeichnet, daß** der Anteil der Beschichtung 0.1 - 15 Gew.% der Masse des eingesetzten unbeschichteten Nickelhydroxids beträgt.

3. Aktives nickelhydroxidhaltiges Material nach Anspruch 1, **dadurch gekennzeichnet, daß** der molare Anteil des Kobalthydroxids in der aufgefällten Schicht 70 - 97 Mol % beträgt.

4. Verfahren zur Herstellung eines aktiven Materials gemäß Anspruch 1, **dadurch gekennzeichnet, daß** Teilchen aus sphärischem Nickelhydroxid in einer Lauge dispergiert werden und ein Gemisch der wäßrigen Salzlösungen von Kobalt und einem Metall ausgewählt aus der Gruppe Cu, Pb, Cr der Nebengruppe IIIb oder der Gruppe der Lanthaniden bei Temperaturen von 5 - 100°C zugetropft wird, wobei der pH-Wert zwischen 10 und 14 gehalten wird.

5. Verfahren nach Anspruch 3, **dadurch gekennzeichnet, daß** die Zugabe der wäßrigen Salzlösungen bei Temperaturen von 20 - 80°C im pH-Bereich zwischen 11 und 12 erfolgt.

## Claims

1. Active material for positive electrodes of alkaline accumulators or storage batteries, where the surface of the particles of spherical nickel hydroxide is coated with a metal mixed hydroxide, **characterized in that** the coating is composed of a cobalt hydroxide mixed with a hydroxide of a metal selected from the group consisting of Cu, Pb, Cr of the transition group IIIb or the lanthanide group or a mixture of these hydroxides, the molar fraction of the cobalt hydroxide in the coating being 60-99.5 mol%.

2. Active material comprising nickel hydroxide according to Claim 1, **characterized in that** the fraction of the coating is 0.1-15% by weight of the mass of the uncoated nickel hydroxide used.

3. Active material comprising nickel hydroxide according to Claim 1, **characterized in that** the molar fraction of the cobalt hydroxide in the coat applied by precipitation is 70-97 mol%.

4. Method of preparing an active material according to Claim 1, **characterized in that** particles of spherical nickel hydroxide are dispersed in an aqueous alkali and a mixture of the aqueous salt solutions of cobalt and a metal selected from the group consisting of Cu, Pb, Cr of the transition group IIIb or the lanthanide group is added dropwise at temperatures of 5-100°C, the pH being held between 10 and 14.

5. Method according to Claim 3, **characterized in that** the aqueous salt solutions are added at temperatures of 20-80°C in the pH range between 11 and 12.

## Revendications

1. Matériau actif pour électrodes positives d'accumulateurs alcalins, dont la surface des particules d'hydroxyde de nickel sphérique est enrobée d'un hydroxyde mixte de métaux,
**caractérisé en ce que**
l'enrobage consiste en un hydroxyde de cobalt mixte avec un hydroxyde d'un métal choisi dans le groupe Cu, Pb, Cr du sous-groupe III B ou dans le groupe des lanthanides ou d'un mélange de ces hydroxydes, la proportion molaire de l'hydroxyde de cobalt dans l'enrobage étant de 60 à 99,5 % en moles.

2. Matériau actif à base d'hydroxyde de nickel selon la revendication 1,
**caractérisé en ce que**
la proportion de l'enrobage est de 0,1 à 15 % en poids de la masse de l'hydroxyde de nickel non enrobé utilisé.

3. Matériau actif à base d'hydroxyde de nickel selon la revendication 1,
**caractérisé en ce que**
la proportion molaire de l'hydroxyde de cobalt dans la couche précipitée est de 70 à 97 % en moles.

4. Procédé de fabrication d'un matériau actif selon la revendication 1,
**caractérisé en ce que**
des particules d'hydroxyde de nickel sphérique sont dispersées dans une lessive et un mélange des solutions aqueuses de sel de cobalt et d'un métal choisi dans le groupe Cu, Pb, Cr du sous-groupe III B ou dans le groupe des lanthanides est ajouté goutte à goutte à des températures de 5 à 100°C, en maintenant le pH entre 10 et 14.

5. Procédé selon la revendication 4,
**caractérisé en ce que**
l'addition des solutions aqueuses de sel se fait à des températures de 20 à 80°C, dans la plage de pH entre 11 et 12.
